# EUROPÄISCHE PATENTSCHRIFT

(11) **EP 2 999 613 B1**
(45) Veröffentlichungstag und Bekanntmachung des Hinweises auf die Patenterteilung: **14.06.2017**
(21) Anmeldenummer: 14720553.8
(22) Anmeldetag: 23.04.2014
(51) Int. Cl.: B62D 5/065

(54) **ELEKTROHYDRAULISCHES STEER-BY-WIRE-LENKSYSTEM**
ELECTROHYDRAULIC STEER-BY-WIRE STEERING SYSTEM
SYSTÈME DE DIRECTION STEER-BY-WIRE ÉLECTROHYDRAULIQUE

(30) Priorität: 22.05.2013 DE 102013209467
(43) Veröffentlichungstag der Anmeldung: 30.03.2016
(73) Patentinhaber: Deere & Company, Moline, IL 61265 (US)
(72) Erfinder: TARASINSKI, Nicolai, 67227 Frankenthal (DE); BECKER, Manfred, 67259 Beindersheim (DE)
(74) Vertreter: Holst, Sönke
(86) Internationale Anmeldenummer: PCT/EP2014/058217
(87) Internationale Veröffentlichungsnummer: WO 2014/187638

(56) Entgegenhaltungen:
- DE-A1-102005 019 350

## Beschreibung

Die Erfindung betrifft ein elektrohydraulisches steer-by-wire-Lenksystem nach dem Oberbegriff des Anspruchs 1.

### Stand der Technik

Insbesondere landwirtschaftliche Arbeitsfahrzeuge werden üblicherweise mittels hydraulischer Lenksysteme gelenkt, die eine kontinuierlich angetriebene Hydraulikpumpe umfassen, welche über Ventileinrichtungen mit einem Lenkzylinder in Verbindung stehen, vgl. US 5 234 070 A1. Die Ventileinrichtungen werden mittels einer Bedienerschnittstelle (Lenkrad) oder Sensoren, z.B. zur Erfassung von Pflanzenreihen, hydraulisch angesteuert, um das Arbeitsfahrzeug auf einem gewünschten Weg zu bewegen. Um hinreichend schnelle Lenkreaktionen zu ermöglichen, muss das Fördervolumen der kontinuierlich laufenden Hydraulikpumpe hinreichend groß dimensioniert werden. Diese Lenkanordnung benötigt somit relativ viel Energie und trägt einen beträchtlichen Teil zu den Verlusten im Antriebsstrang des Arbeitsfahrzeugs bei.

Weiterhin werden z.B. bei Gabelstaplern so genannte steer-by-wire-Lenksysteme verwendet, die basierend auf einer sensorischen Erfassung der Drehstellung einer Bedienerschnittstelle und einer elektronischen Steuereinrichtung den Lenkwinkel der gelenkten Räder elektromechanisch, elektrohydraulisch oder elektropneumatisch verstellen (s. DE 30 37 221 C1), ohne mechanische Verbindung zwischen der Bedienerschnittstelle und den gelenkten Rädern. Ein derartiges Lenksystem ist auch in der DE 100 37 829 A1 beschrieben, gemäß welcher ein Sensor die Drehbewegungen der Bedienerschnittstelle erfasst und einer Steuereinrichtung entsprechende Signale zuführt. Die Steuereinrichtung treibt abhängig von dem sensierten Lenkwunsch einen Elektromotor an, dessen Ausgangswelle mit einer Hydraulikpumpe gekoppelt ist, die wiederum die Kammern des Lenkzylinders beaufschlagt. Hier wird nur dann Antriebsleistung für den Elektromotor benötigt, wenn auch eine Lenkbewegung vorzunehmen ist.

Bei steer-by-wire-Lenksystemen ist aus rechtlichen Gründen eine Redundanz vorzusehen, um eine Funktion auch dann sicherzustellen, wenn eine Komponente des Lenksystems ausfallen sollte. Die DE 100 37 829 A1 schlägt dazu Ausführungsformen vor, bei denen zwei Elektromotoren und zwei Hydraulikpumpen vorgesehen sind und letztere wahlweise durch Umschaltventile mit der jeweils zugeordneten Kammer des Lenkzylinders verbunden werden können. Im Fehlerfall eines Elektromotors oder einer Pumpe wird somit der Lenkzylinder mit der anderen, noch betriebsbereiten Pumpe verbunden. Bei einer anderen Ausführungsform umfasst der Lenkzylinder vier Kammern, von denen zwei mit einer Pumpe und die anderen mit der anderen Pumpe verbunden sind. Auch in dieser Ausführungsform arbeitet nur jeweils einer der beiden Hydraulikkreise zur Zeit.

Andere steer-by-wire-Lenkeinrichtungen (DE 199 46 074 A1, DE 603 07 889 T2) aus dem automotiven Bereich umfassen zwei Lenkzylinder, die durch zugeordnete elektrohydraulische Kreise verstellt werden, wobei im Normalbetrieb beide Kreise gleichzeitig betrieben werden. Im Fehlerfall ist dann für einen Notbetrieb nur noch einer der Kreise aktiv.

Die als gattungsbildend angesehene DE 10 2005 019 350 A1 beschreibt ein Lenksystem mit zwei elektromotorisch angetriebenen Hydraulikpumpen, die über einen Steuerblock mit zwei Lenkaktoren in Form doppeltwirkender Hydraulikzylinder verbindbar sind. Bei einer Betriebsart, in welcher ein besonders schneller Lenkvorgang erfolgen soll, sind beide Hydraulikpumpen mit einem einzigen Lenkaktor verbunden, während sich der andere Lenkaktor in einer Schwimmbetriebsart befindet.

### Aufgabe der Erfindung

Beim Stand der Technik nach DE 100 37 829 A1 ist als nachteilig anzusehen, dass die vorgesehene Redundanz mit je einem Elektromotor und einer Hydraulikpumpe (und in der Ausführungsform mit dem vierkammerigen Lenkzylinder auch die Hälfte des Lenkzylinders) im Normalbetrieb wirkungslos ist. Die Lenkgeschwindigkeit und -reaktion wird durch die Kapazität eines einzigen Hydraulikkreises begrenzt, der deshalb hinreichend groß zu dimensionieren ist, damit eine ausreichende Lenkgeschwindigkeit erzielt wird. Der Käufer erwirbt somit eine Anzahl kostspieliger Komponenten und führt sie tagaus, tagein in seinem Fahrzeug mit, obwohl sie für ihn in den meisten Fällen keinen Nutzen haben, da sie nicht zur Lenkwirkung beitragen. Dieser Nachteil wird beim Stand der Technik nach DE 199 46 074 A1 und DE 603 07 889 T2 vermieden, jedoch auf Kosten der Verwendung zweier Lenkzylinder. Die vorliegende Erfindung hat sich daher zur Aufgabe gesetzt, ein elektrohydraulisches steer-by-wire-Lenksystem bereitzustellen, das trotz Redundanz nur einen Lenkzylinder benötigt und im Normalbetrieb die Kapazität beider Hydraulikkreise ausnutzt.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein elektrohydraulisches steer-by-wire-Lenksystem umfasst eine Bedienerschnittstelle zur Vorgabe eines Lenkwinkels, der ein Sensor zur Erfassung einer Position und/oder Bewegung der Bedienerschnittstelle zugeordnet ist. Eine mit dem Sensor verbundene, elektronische Steuereinrichtung ist mit einem ersten elektrohydraulischen Kreis und einem zweiten elektrohydraulischen Kreis verbunden und eingerichtet, die beiden elektrohydraulischen Kreise in Abhängigkeit von den Signalen des Sensors anzusteuern. Ein Lenkaktor zur Verstellung des Lenkwinkels wenigstens eines lenkbaren Rades weist genau zwei Kammern auf, die in einem Normalbetrieb des Lenksystems jeweils gleichzeitig mit beiden elektrohydraulischen Kreisen verbunden sind.

Der Lenkaktor wird demnach im Normalbetrieb durch zwei elektrohydraulische Kreise angesteuert. Seine zwei Kammern sind mit beiden Kreisen verbunden, sodass beide Kreise aktiv zur Lenkung beitragen. Fall einer der Kreise ausfällt, steuert immer noch der andere Kreis den Lenkaktor an. Auf diese Weise werden im Normalfall beide elektrohydraulischen Kreise zur Lenkung genutzt, obwohl nur ein einziger Lenkaktor mit nur zwei Kammern vorgesehen ist. Im Fehlerfall ist die Lenkgeschwindigkeit zwar vermindert, reicht aber dennoch aus, was den Vorteil hat, dass der Bediener den Fehler erkennen und mit entsprechend angepasster Fahrweise und der Aufsuche einer Reparaturwerkstatt reagieren kann. Das vorliegende Lenksystem vereinigt somit die schnelle Lenkgeschwindigkeit der bisherigen Lenksysteme mit zwei Lenkzylindern mit der Einfachheit des bisherigen Lenksystems mit nur einem Lenkzylinder.

Die elektrohydraulischen Kreise umfassen jeweils einen von der Steuereinrichtung kontrollierten, drehrichtungsumkehrbaren und mit veränderlicher Drehzahl antreibbaren Elektromotor und eine in beiden Drehrichtungen Hydraulikfluid fördernde Hydraulikpumpe, deren Anschlüsse mit jeweils einer Kammer des Lenkaktors verbunden oder verbindbar sind. Diese Ausführungsform ist energiesparend, da nur dann Antriebsleistung für den Elektromotor benötigt wird, wenn auch tatsächlich eine Lenkbewegung stattfindet.

Zur Entkopplung beider elektrohydraulischen Kreise werden die Anschlüsse der Hydraulikpumpen jeweils durch ihnen zugeordnete, vorzugsweise federbelastete Rückschlagventile mit den Kammern des Lenkaktors verbunden. Dadurch erreicht man insbesondere für den Fall eines Fehlers eines der elektrohydraulischen Kreise, dass der andere Kreis noch weiterhin wirksam ist, ohne dass Hydraulikfluid in den defekten Kreis abfließen kann, da dies durch die Rückschlagventile verhindert wird. Anstelle der Rückschlagventile können auch beliebige, andere Absperrventile Verwendung finden, die im Fehlerfall den betroffenen elektrohydraulischen Kreis vom Lenkaktor trennen. Hierfür können z.B. übliche druckgesteuerte Ventile genutzt werden, die durch Druckunterschiede zwischen beiden Kreisen kontrolliert werden. Die Rückschlagventile oder Absperrventile können im Übrigen auch bei elektrohydraulischen Kreisen Verwendung finden, die eine permanent angetriebene Hydraulikpumpe umfassen, welche durch elektromagnetische, von der Steuereinrichtung kontrollierte Sperrventile oder beliebige andere Ventile mit den Kammern des Lenkaktors verbunden sind.

Die lenkaktorseitigen Anschlüsse (Auslässe) der zwischen den Anschlüssen der Hydraulikpumpen und den Kammern des Lenkaktors angeordneten Rückschlagventile sind mit jeweils einem ersten Anschluss eines Sperrventils verbunden, dessen zweiter Anschluss mit einem Vorratstank für Hydraulikfluid verbindbar oder verbunden ist. Das Sperrventil ist vorzugsweise ein so genanntes Senkbremsventil. Das Sperrventil wird vorzugsweise durch den hydraulikpumpenseitigen Druck des jeweils anderen Rückschlagventils des jeweiligen elektrohydraulischen Kreises und/oder durch den an seinem ersten Anschluss liegenden Druck gesteuert. Das Sperrventil sorgt dafür, dass der Druck in der sich beim Lenken jeweils kontrahierenden Kammer des Lenkaktors mit angemessener Flussrate abgebaut wird, da ein Druckabfluss durch das die kontrahierende Kammer mit dem ansaugenden Anschluss des Hydraulikmotors verbindende, nun geschlossene Rückschlagventil nicht möglich ist.

Der Vorratstank für Hydraulikfluid kann mit je einem Eingang der Hydraulikpumpe zur Zuführung von Hydraulikfluid und/oder über jeweils ein Rückschlagventil mit beiden Anschlüssen beider Hydraulikpumpen verbunden werden. Dadurch kann die Hydraulikpumpe, wenn nötig, mit zusätzlichem Hydraulikfluid versorgt oder überschüssiges Hydraulikfluid wieder in den Vorratstank abgegeben werden.

Die zweiten Anschlüsse beider Sperrventile können über einen Filter mit dem Vorratstank für Hydraulikfluid verbunden werden, dem ein Druckbegrenzungsventil parallel geschaltet sein kann.

### Ausführungsbeispiel

In den Zeichnungen ist ein nachfolgend näher beschriebenes Ausführungsbeispiel der Erfindung dargestellt. Es zeigt:
- Fig. 1: eine Draufsicht auf ein landwirtschaftliches Arbeitsfahrzeug mit einem elektrohydraulischen steer-by-wire-Lenksystem,
- Fig. 2: ein vereinfachtes Schema des Lenksystems, und
- Fig. 3: ein Hydraulikschema des Lenksystems.

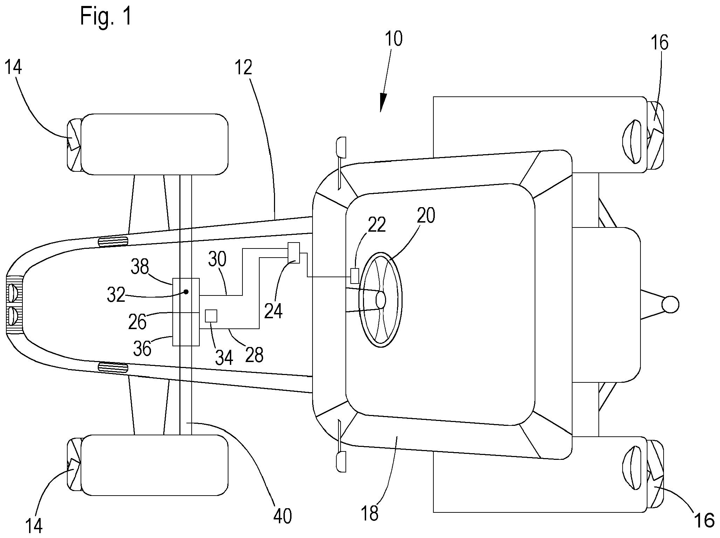

Die Figur 1 zeigt ein landwirtschaftliches Arbeitsfahrzeug 10 in Form eines Traktors, das ein Fahrgestell 12 umfasst, das sich auf lenkbaren vorderen Rädern 14 und angetriebenen hinteren Rädern 16 abstützt. Ein Verbrennungsmotor (nicht gezeigt) dient zum Antrieb der antreibbaren Elemente des Arbeitsfahrzeugs 10. In einer Kabine 18 befindet sich ein Arbeitsplatz für einen Bediener, der mittels einer Bedienerschnittstelle 20 in Form eines Lenkrades den Lenkwinkel der lenkbaren Räder 14 vorgeben kann. Die Bedienerschnittstelle 20 wirkt mit einem Sensor 22 zusammen, welcher den Drehwinkel der Bedienerschnittstelle 20 oder Änderungen des Drehwinkels der Bedienerschnittstelle 20 um eine Drehachse erfasst. Der Sensor 22 kann beispielsweise als Inkrementalwinkelgeber mit einer Lichtschranke oder Magnetfeldsensoren aufgebaut sein. Die Bedienerschnittstelle 20 könnte auch als Joystick o.ä. ausgeführt sein.

Der Sensor 22 ist elektrisch mit einer elektrohydraulischen Steueranordnung 24 verbunden, die wiederum durch zwei Hydraulikleitungen 28, 30 mit den zwei Kammern 36, 38 eines Lenkaktors 26 in Form eines Hydraulikzylinders verbunden ist. Die Kolbenstangen 32 des Lenkaktors 26 verstellen eine Spurstange 40 in seitlicher Richtung, die wiederum den Winkel der an einer Vorderachse 42 schwenkbar angebrachten, lenkbaren Räder 14, also den Lenkwinkel, kontrolliert. Ein Rückkopplungssensor 34 meldet der Steueranordnung 24 den jeweiligen Ist-Lenkwinkel des Arbeitsfahrzeugs 10 zurück.

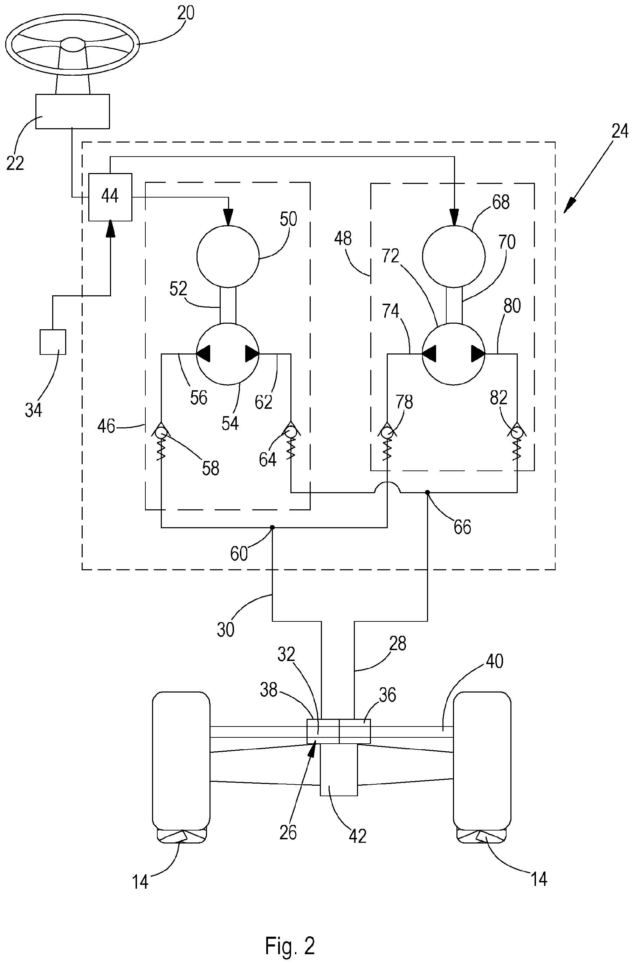

Die Figur 2 zeigt ein vereinfachtes Schema des Lenksystems des Arbeitsfahrzeugs 10 der Figur 1. Die insgesamt mit 24 gekennzeichnete elektrohydraulische Steueranordnung umfasst eine elektronische Steuereinrichtung 44, die vom Sensor 22 mit Signalen hinsichtlich des vom Bediener gewünschten Lenkwinkels und vom Rückkopplungssensor 34 mit Signalen hinsichtlich des tatsächlichen Lenkwinkels der lenkbaren Räder 14 beaufschlagt wird. Die Versorgung der Steuereinrichtung 44 mit Strom erfolgt durch das Bordnetz des Arbeitsfahrzeugs 10. Die Beaufschlagung der Kammern 36, 38 des Lenkaktors 26 mit Hydraulikfluid erfolgt durch zwei getrennte elektrohydraulische Kreise 46, 48.

Der erste elektrohydraulische Kreis 46 umfasst einen ersten Elektromotor 50, dessen Ausgangswelle 52 zum Antrieb einer ersten Hydraulikpumpe 54 dient. Ein erster Anschluss 56 der ersten Hydraulikpumpe 54 ist über ein federbelastetes Rückschlagventil 58 mit einem Verbindungspunkt 60 verbunden, an dem auch eine erste Hydraulikleitung 30, die zur ersten Kammer 38 des Lenkaktors 26 führt, angeschlossen ist. Ein zweiter Anschluss 62 der ersten Hydraulikpumpe 54 ist über ein federbelastetes Rückschlagventil 64 mit einem Verbindungspunkt 66 verbunden, an dem auch eine zweite Hydraulikleitung 28, die zur zweiten Kammer 36 des Lenkaktors 26 führt, angeschlossen ist.

Der zweite elektrohydraulische Kreis 48 umfasst einen zweiten Elektromotor 68, dessen Ausgangswelle 70 zum Antrieb einer zweiten Hydraulikpumpe 72 dient. Ein erster Anschluss 72 der zweiten Hydraulikpumpe 54 ist über ein federbelastetes Rückschlagventil 78 mit dem Verbindungspunkt 60 verbunden, an dem auch die erste Hydraulikleitung 30, die zur ersten Kammer 38 des Lenkaktors 26 führt, angeschlossen ist. Ein zweiter Anschluss 80 der zweiten Hydraulikpumpe 72 ist über ein federbelastetes Rückschlagventil 82 mit dem Verbindungspunkt 66 verbunden, an dem auch die zweite Hydraulikleitung 28, die zur zweiten Kammer 36 des Lenkaktors 26 führt, angeschlossen ist.

Die Elektromotoren 50, 68 sind in beiden Drehrichtungen und mit veränderlicher Geschwindigkeit antreibbar. Sie können beispielsweise als Gleichstrommotor ausgeführt sein. Analog können die beiden Hydraulikpumpen 54, 72 ihr Hydraulikfluid in beiden Richtungen fördern. Die Hydraulikpumpen 54, 72 können als Konstantpumpen oder Flügelzellenpumpen ausgeführt sein. Wenn der Bediener demnach die Bedienerschnittstelle 20 nach rechts dreht, um nach rechts (vgl. Figur 1) zu lenken, veranlasst die Steuereinheit 44 die Elektromotoren 50, 68 in eine Drehrichtung zu drehen, die dazu führt, dass die zweite Kammer 36 des Lenkaktors 26 gefüllt wird und die erste Kammer 38 des Lenkaktors 26 sich leert. Analog veranlasst die Steuereinheit 44 die Elektromotoren 50, 68 in eine Drehrichtung zu drehen, die dazu führt, dass die erste Kammer 38 des Lenkaktors 26 mit Hydraulikfluid gefüllt wird und sich die zweite Kammer 36 des Lenkaktors 26 leert. Dabei wird das Signal des Rückkopplungssensors 34 verwendet, um sicherzustellen, dass der tatsächliche Lenkwinkel mit dem gewünschten Lenkwinkel übereinstimmt. Die Verstellgeschwindigkeit des Lenkaktors 26 wird durch die vorgegebene Sollgeschwindigkeit bestimmt, mit welcher der Bediener die Bedienerschnittstelle betätigt. Die Geschwindigkeit der Elektromotoren 50, 68 und somit die Flussrate in den Hydraulikleitungen 28, 30 hängt von dieser Sollgeschwindigkeit ab. Durch den Parallelbetrieb der beiden elektrohydraulischen Kreise 46, 48 erzielt man im Normalbetrieb, d.h. wenn beide elektrohydraulischen Kreise 46, 48 betriebsfähig sind, eine relativ hohe Lenkgeschwindigkeit. Die Beaufschlagung des einzigen Lenkaktors 26 mit nur zwei in gegensinnige Lenkrichtungen wirkenden Kammern 38, 36 hält den Aufwand in überschaubaren Grenzen.

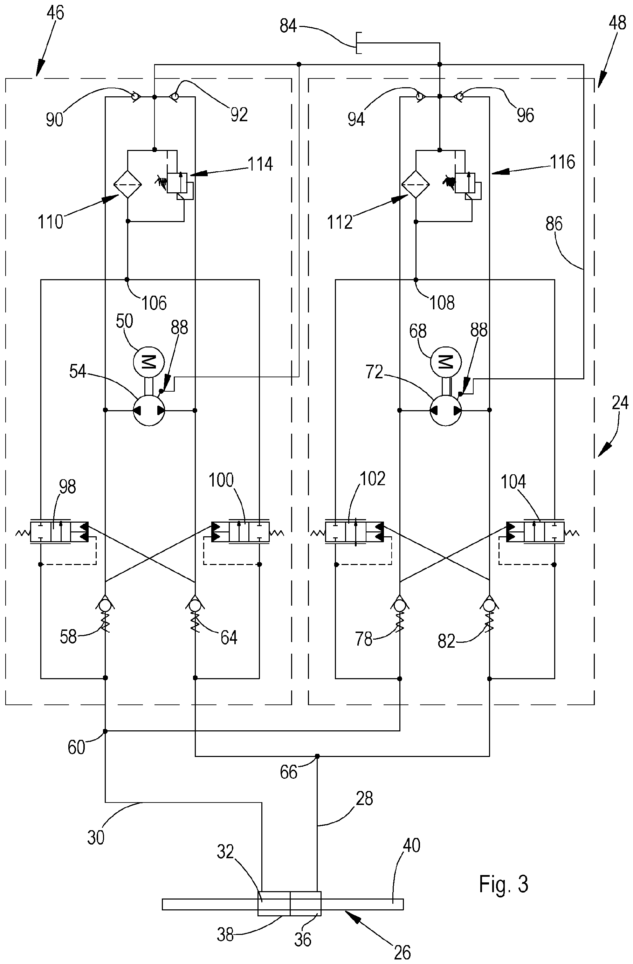

Die Rückschlagventile 58, 64, 78, 82 öffnen jeweils nur dann, wenn an ihren mit den Anschlüssen 56, 62, 74, 80 der Hydraulikpumpen 54, 72 verbundenen, in der Figur 2 oben eingezeichneten Einlässen ein höherer Druck anliegt als an den unten eingezeichneten Auslässen. Dadurch verhindert man, dass bei Ausfall eines der elektrohydraulischen Kreise 46, 48 der andere elektrohydraulische Kreis 48, 46 mit ausfällt. Im Fehlerfall eines elektrohydraulischen Kreises 46 oder 48 bleibt das Lenksystem demnach weiterhin funktionsfähig, wenn auch mit halber Lenkleistung. Dies hat zudem den Vorteil, dass der Bediener den Fehler leicht bemerken und darauf reagieren kann. Durch weitere Ventile (in der Figur 2 nicht eingezeichnet) wird ein Rückfluss des Hydraulikfluids aus der sich jeweils kontrahierenden Kammer des Lenkaktors 26 zum ansaugseitigen Anschluss der Hydraulikpumpen 54, 72 ermöglicht, wobei geschlossene Kreise 46, 48, wie in der Figur 2 schematisch dargestellt, oder offene Kreise 46, 48 denkbar sind, bei denen das Hydraulikfluid aus der sich jeweils kontrahierenden Kammer des Lenkaktors 26 zuerst in einen Vorratstank 84 und von dort zum ansaugseitigen Anschluss der Hydraulikpumpen 54, 72 gelangt, wie in der Figur 3 gezeigt.

Die Figur 3 zeigt die elektrohydraulische Steueranordnung der Figur 2 mit weiteren Verfeinerungen. Ein Vorratstank 84 für Hydraulikfluid ist über Leitungen 86 mit je einem Eingang 88 der Hydraulikpumpen 54, 72 verbunden, über welchen den Hydraulikpumpen 54, 72 nötigenfalls Hydraulikfluid zugeführt werden kann. Außerdem ist der Vorratstank 84 über jeweils ein Rückschlagventil 90, 92, 94, 96 mit beiden Anschlüssen beider Hydraulikpumpen 54, 72 verbunden. Wenn an einem der Anschlüsse der Hydraulikpumpen 54, 72 ein Druck anliegt, der kleiner ist als jener im Vorratstank 84, wird demnach selbsttätig Hydraulikfluid an den betroffenen Anschluss der Hydraulikpumpe 54, 72 nachgefördert, um Kavitationseffekte zu vermeiden. Der Vorratstank 84 kann dem Lenksystem zugeordnet sein, oder der Vorratstank der Bordhydraulik wird durch das Lenksystem mitverwendet, wobei die Versorgung durch geeignete Prioritätsventile sicherzustellen wäre.

Weiterhin sind insgesamt vier als Proportionalventile ausgeführte Sperrventile 98, 100, 102, 104 vorgesehen. Die (in Figur 3 unten eingezeichneten) Eingänge der Sperrventile 98, 100, 102, 104 sind jeweils mit einem Auslass eines der Rückschlagventile 58, 64, 78 und 82 verbunden. Die (in Figur 3 oben eingezeichneten) Ausgänge der Sperrventile 98, 100, 102, 104 sind jeweils mit einem von zwei Verbindungspunkten 106, 108 verbunden, die wiederum über einen Filter 110, 112 und ein parallel zum Filter 110, 112 geschaltetes Druckbegrenzungsventil 114, 116 mit dem Vorratstank 84 verbunden sind. Die durch Federn in die geschlossene Stellung vorgespannten Sperrventile 98, 100, 102, 104 werden durch den Druck an ihrem Einlass und durch den Druck am Einlass des jeweils anderen Rückschlagventils 64, 58, 82, 78 des jeweiligen Kreises 46 oder 48 kontrolliert. Dazu sind ihre Steuerkammern durch Steuerleitungen mit den Einlässen der Rückschlagventile 64, 58, 82, 78 verbunden. Vorzugsweise ist der zum Öffnen des Sperrventils 98, 100, 102, 104 erforderliche Öffnungsdruck in der direkt mit dem Einlass des Sperrventils 98, 100, 102, 104 verbundenen Steuerkammer (aufgrund kleinerer Fläche) höher als jener in der mit dem jeweils anderen Rückschlagventils 64, 58, 82, 78 des jeweiligen Kreises 46 oder 48 verbundenen Steuerkammer.

Die Sperrventile 98, 100, 102, 104 sind vorzugsweise als Senkbremsventile ausgeführt. Sie öffnen einerseits, wenn der Druck an einem der Verbindungspunkte 60 oder 66 ansteigt und leiten das Hydraulikfluid über den Filter 110 und/oder 112 (oder bei Verstopfung des Filters 110 oder 112 über das Druckbegrenzungsventil 114 und/oder 116) in den Vorratstank 84 ab. Dadurch wird eine Verringerung des Volumens der sich bei einer Lenkbewegung jeweils kontrahierenden Kammer 38 oder 36 des Lenkaktors 26 ermöglicht, da das mit der jeweils kontrahierenden Kammer 38 oder 36 des Lenkaktors 26 verbundene Rückschlagventil 64, 58, 82, 78 jeweils geschlossen ist. Andererseits öffnen sich die Sperrventile 98, 100, 102, 104 auch durch den Druck der jeweils expandierenden Kammer 38 oder 36 des Lenkaktors 26, der stromauf des sich dann öffnenden Rückschlagventils 58, 64, 78, 82 erfasst und der Steuerkammer des Sperrventils 98, 100, 102, 104 zugeführt wird.

Nach alledem ergibt sich im Normalbetrieb folgende Funktion des Lenksystems. Wenn keine Lenkbewegung gewünscht wird, stehen die Elektromotoren 50, 68 und auch die Hydraulikpumpen 54, 72 still und es fließt kein Hydraulikfluid und der Lenkaktor 26 steht still. Allenfalls kann durch ein Rückschlagventil 58, 64, 78, 82 und 90 bis 96 ein noch von einer vorherigen Lenkbewegung übrig gebliebener Druckunterschied abgebaut werden.

Wenn der Bediener nun die Bedienerschnittstelle 20 betätigt, um nach rechts zu lenken, veranlasst die Steuereinrichtung 44 die Elektromotoren 50, 68 sich in die Richtung zu drehen, die dazu führt, dass sich an den in Figur 3 links eingezeichneten Anschlüssen der Hydraulikpumpen 54 und 72 ein Druck aufbaut. Dieser Druck führt dazu, dass die Rückschlagventile 58 und 78 öffnen und das Hydraulikfluid über den Verbindungspunkt 60 und die Hydraulikleitung 30 in die erste Kammer 38 des Lenkaktors 26 gelangt. Der Kolben 32 verschiebt sich nach links und die Räder 14 werden nach rechts gelenkt. Durch den Druck an den Einlässen der Rückschlagventile 58, 78 und den sich in der kontrahierenden, zweiten Kammer 36 des Lenkaktors 26 aufbauenden Druck, der über die Hydraulikleitung 28 und den Verbindungspunkt 66 auch in die Steuerkammern der Sperrventile 100 und 104 gelangt, öffnen diese und das Hydraulikfluid strömt über die Sperrventile 100 und 104 und die Filter 110, 112 und/oder die Druckbegrenzungsventile 114, 116 in den Vorratstank 84. Die Versorgung der Hydraulikpumpen 54, 72 mit Hydraulikfluid erfolgt über die Eingänge 88 und/oder die Rückschlagventile 92, 96. Die jeweils anderen Sperrventile 98, 102 und die Rückschlagventile 64, 82 bleiben mangels zum Öffnen hinreichender, anliegender Drücke geschlossen.

Wenn analog der Bediener nun die Bedienerschnittstelle 20 betätigt, um nach links zu lenken, veranlasst die Steuereinrichtung 44 die Elektromotoren 50, 68 sich in die andere Richtung zu drehen, die dazu führt, dass sich an den in Figur 3 rechts eingezeichneten Anschlüssen der Hydraulikmotoren 54 und 72 ein Druck aufbaut. Dieser Druck führt dazu, dass die Rückschlagventile 64 und 82 öffnen und das Hydraulikfluid über den Verbindungspunkt 66 und die Hydraulikleitung 28 in die zweite Kammer 36 des Lenkaktors 26 gelangt. Der Kolben 32 verschiebt sich nach rechts und die Räder 14 werden nach links gelenkt. Durch den Druck an den Einlässen der Rückschlagventile 64, 82 und den sich in der kontrahierenden, ersten Kammer 38 des Lenkaktors 26 aufbauenden Druck, der über die Hydraulikleitung 30 und den Verbindungspunkt 60 auch in die Steuerkammern der Sperrventile 98 und 102 gelangt, öffnen diese und das Hydraulikfluid strömt über die Sperrventile 98 und 102 und die Filter 110, 112 und/oder die Druckbegrenzungsventile 114, 116 in den Vorratstank 84. Die Versorgung der Hydraulikpumpen 54, 72 mit Hydraulikfluid erfolgt über die Eingänge 88 und/oder die Rückschlagventile 90, 94. Die jeweils anderen Sperrventile 100, 104 und die Rückschlagventile 58, 78 bleiben mangels zum Öffnen hinreichender, anliegender Drücke geschlossen.

Im Fall, dass einer der elektrohydraulischen Kreise 46, 48 einem Defekt unterliegt, kann sich kein Druck in diesem Kreis aufbauen. Die Rückschlagventile 58, 64, 78, 82 verhindern, dass Hydraulikfluid von einem funktionierenden Kreis in einen defekten Kreis abfließt und ermöglichen den Weiterbetrieb des Lenksystems mit nur einem verbleibenden, funktionierenden Kreis. Die Fehlfunktion des defekten Kreises 46 oder 48 kann durch die Steuereinrichtung 44 mittels entsprechender Sensoren, z.B. für die Drehung der Elektromotoren 50, 68 und/oder die Drücke im Kreis erfasst werden und ggf. wird der Elektromotor 50 oder 68 des defekten Kreises 46 oder 48 selbsttätig abgeschaltet.

## Patentansprüche

1. Elektrohydraulisches steer-by-wire-Lenksystem, umfassend:
eine Bedienerschnittstelle (20) zur Vorgabe eines Lenkwinkels, der ein Sensor (22) zur Erfassung einer Position und/oder Bewegung der Bedienerschnittstelle (20) zugeordnet ist,
eine mit dem Sensor (22) verbundene, elektronische Steuereinrichtung (44), die mit einem ersten elektrohydraulischen Kreis (46) und einem zweiten elektrohydraulischen Kreis (48) verbunden ist, wobei die Steuereinrichtung (44) eingerichtet ist, die beiden elektrohydraulischen Kreise (46, 48) in Abhängigkeit von den Signalen des Sensors (22) anzusteuern,
und einen Lenkaktor (26) zur Verstellung des Lenkwinkels eines lenkbaren Rades (14), wobei der Lenkaktor (26) zwei Kammern (38, 36) hat, die in einem Normalbetrieb des Lenksystems jeweils gleichzeitig mit beiden elektrohydraulischen Kreisen (46, 48) verbunden sind,
wobei die elektrohydraulischen Kreise (46, 48) jeweils einen von der Steuereinrichtung (44) kontrollierten, drehrichtungsumkehrbaren und mit veränderlicher Drehzahl antreibbaren Elektromotor (50, 68) und eine in beiden Drehrichtungen Hydraulikfluid fördernde Hydraulikpumpe (54, 72) umfassen, deren Anschlüsse mit jeweils einer Kammer (38, 36) des Lenkaktors (26) verbunden oder verbindbar sind,
**dadurch gekennzeichnet, dass** die Anschlüsse der Hydraulikpumpen (54, 72) jeweils durch ihnen zugeordnete Rückschlagventile (58, 64, 78, 82) mit den Kammern (38, 36) des Lenkaktors (26) verbunden sind,
und dass die lenkaktorseitigen Anschlüsse der zwischen den Anschlüssen der Hydraulikpumpen (54, 72) und den Kammern (38, 36) des Lenkaktors (26) angeordneten Rückschlagventile (58, 64, 78, 82) mit jeweils einem ersten Anschluss eines Sperrventils (98 bis 104) verbunden sind, dessen zweiter Anschluss mit einem Vorratstank (84) für Hydraulikfluid verbindbar oder verbunden ist.

2. Lenksystem nach Anspruch 1, wobei der Vorratstank (84) für Hydraulikfluid mit je einem Eingang (88) der Hydraulikpumpe (54, 72) zur Zuführung von Hydraulikfluid und/oder über jeweils ein Rückschlagventil (90 bis 96) mit beiden Anschlüssen beider Hydraulikpumpen (54, 72) verbunden ist.

3. Lenksystem nach Anspruch 1, wobei das Sperrventil (98 bis 104) durch den hydraulikpumpenseitigen Druck des jeweils anderen Rückschlagventils (64, 58, 82, 78) des jeweiligen elektrohydraulischen Kreises (46, 48) und/oder durch den an seinem ersten Anschluss liegenden Druck gesteuert ist.

4. Lenksystem nach Anspruch 1 oder 3, wobei die zweiten Anschlüsse beider Sperrventile (98 bis 104) über einen Filter (110, 112) mit dem Vorratstank (84) für Hydraulikfluid verbindbar oder verbunden sind.

5. Lenksystem nach Anspruch 4, wobei ein Druckbegrenzungsventil (114, 116) parallel zum Filter (110, 112) geschaltet ist.

6. Fahrzeug, insbesondere landwirtschaftliches Arbeitsfahrzeug (10), mit wenigstens einem lenkbaren Rad (14) und einem Lenksystem nach einem der vorhergehenden Ansprüche.

## Claims

1. Electrohydraulic steer-by-wire steering system, comprising:
an operator interface (20) for specifying a steering angle, said operator interface being assigned a sensor (22) for sensing a position and/or movement of the operator interface (20),
an electronic control device (44) which is connected to the sensor (22) and is connected to a first electrohydraulic circuit (46) and a second electrohydraulic circuit (48), wherein
the control device (44) is designed to activate the two electrohydraulic circuits (46, 48) depending on the signals of the sensor (22),
and a steering actuator (26) for adjusting the steering angle of a steerable wheel (14), wherein the steering actuator (26) has two chambers (38, 36) which, in a normal operation of the steering system, are both simultaneously connected to the two electrohydraulic circuits (46, 48),
wherein the electrohydraulic circuits (46, 48) each comprise an electric motor (50, 68) which is controlled by the control device (44), is reversible in direction of rotation and
drivable at a variable speed, and a hydraulic pump (54, 72) which conveys hydraulic fluid in the two directions of rotation and the connections of which are connected or are connectable to one chamber (38, 36) each of the steering actuator (26),
**characterized in that** the connections of the hydraulic pumps (54, 72) are each connected by the non-return valves (58, 64, 78, 82) assigned to them to the chambers (38, 36) of the steering actuator (26),
and **in that** the steering-actuator-side connections of the non-return valves (58, 64, 78, 82) arranged between the connections of the hydraulic pumps (54, 72) and the chambers (38, 36) of the steering actuator (26) are connected to in each case a first connection of a shut-off valve (98 to 104), the second connection of which is connectable or is connected to a storage tank (84) for hydraulic fluid.

2. Steering system according to Claim 1, wherein the storage tank (84) for hydraulic fluid is connected to an inlet (88) in each case of the hydraulic pump (54, 72) for supplying hydraulic fluid and/or via a non-return valve (90 to 96) in each case to the two connections of the two hydraulic pumps (54, 72).

3. Steering system according to Claim 1, wherein the shut-off valve (98 to 104) is controlled by the hydraulic-pump-side pressure of the respectively other non-return valve (64, 58, 82, 78) of the respective electrohydraulic circuit (46, 48) and/or by the pressure present at its first connection.

4. Steering system according to Claim 1 or 3, wherein the second connections of the two shut-off valves (98 to 104) are connectable or are connected to the storage tank (84) for hydraulic fluid via a filter (110, 112).

5. Steering system according to Claim 4, wherein a pressure-limiting valve (114, 116) is connected parallel to the filter (110, 112).

6. Vehicle, in particular agricultural working vehicle (10), with at least one steerable wheel (14) and a steering system according to one of the preceding claims.

## Revendications

1. Système de direction électrohydraulique steer-by-wire, comprenant :
une interface d'opérateur (20) pour prédéfinir un angle de direction, à laquelle est associé un capteur (22) pour détecter une position et/ou un déplacement de l'interface d'opérateur (20),
un dispositif de commande électronique (44) connecté au capteur (22), qui est connecté à un premier circuit électrohydraulique (46) et à un deuxième circuit électrohydraulique (48), le dispositif de commande (44) étant prévu pour commander les deux circuits électrohydrauliques (46, 48) en fonction des signaux du capteur (22), et un actionneur de direction (26) pour le réglage de l'angle de direction d'une roue dirigeable (14), l'actionneur de direction (26) présentant deux chambres (38, 36) qui, pendant un fonctionnement normal du système de direction, sont à chaque fois connectées simultanément aux deux circuits électrohydrauliques (46, 48),
les circuits électrohydrauliques (46, 48) comprenant chacun un moteur électrique (50, 68) contrôlé par le dispositif de commande (44), dont le sens de rotation peut être inversé et pouvant être entraîné avec un régime variable, et une pompe hydraulique (54, 72) refoulant du fluide hydraulique dans les deux sens de rotation, dont les raccords sont connectés ou peuvent être connectés à une chambre respective (38, 36) de l'actionneur de direction (26),
**caractérisé en ce que** les raccords des pompes hydrauliques (54, 72) sont à chaque fois connectés par leurs clapets antiretour associés (58, 64, 78, 82) aux chambres (38, 36) de l'actionneur de direction (26),
et **en ce que** les raccords côté actionneur de direction des clapets antiretour (58, 64, 78, 82) disposés entre les raccords des pompes hydrauliques (54, 72) et les chambres (38, 36) de l'actionneur de direction (26) sont connectés à chaque fois à un premier raccord d'une soupape d'arrêt (98 à 104) dont le deuxième raccord peut être connecté ou est connecté à un réservoir (84) pour du fluide hydraulique.

2. Système de direction selon la revendication 1, dans lequel le réservoir (84) pour du fluide hydraulique est connecté à une entrée respective (88) de la pompe hydraulique (54, 72) pour acheminer du fluide hydraulique et/ou par le biais d'un clapet antiretour respectif (90 à 96) aux deux raccords des deux pompes hydrauliques (54, 72).

3. Système de direction selon la revendication 1, dans lequel la soupape d'arrêt (98 à 104) est commandée par la pression côté pompe hydraulique de chaque autre clapet antiretour (64, 58, 82, 78) du circuit électrohydraulique respectif (46, 48) et/ou par la pression s'appliquant à son premier raccord.

4. Système de direction selon la revendication 1 ou 3, dans lequel les deuxièmes raccords des deux soupapes d'arrêt (98 à 104) peuvent être connectés ou sont connectés par le biais d'un filtre (110, 112) au réservoir (84) pour du fluide hydraulique.

5. Système de direction selon la revendication 4, dans lequel une soupape de limitation de la pression (114, 116) est branchée en parallèle avec le filtre (110, 112).

6. Véhicule, en particulier véhicule de travail agricole (10), comprenant au moins une roue dirigeable (14) et un système de direction selon l'une quelconque des revendications précédentes.
